# EUROPEAN PATENT APPLICATION

(11) **EP 0 699 633 A2**
(43) Date of publication of application: **06.03.1996**
(21) Application number: 95305575.3
(22) Date of filing: 10.08.1995
(51) Int. Cl.: C02F 11/00

(54) **Solidification and pneumatic transportation equipment for soft mud**

(30) Priority: 02.09.1994 JP 209728/94; 14.10.1994 JP 249189/94; 21.10.1994 JP 257038/94; 28.10.1994 JP 265268/94
(71) Applicant: UBE INDUSTRIES, LTD., Ube-shi, Yamaguchi-ken 755 (JP)
(72) Inventor: Kuioka, Kiyoshi, c/o Ube Machinery Works, Oaza Kogushi, Ube-shi, Yamaguchi (JP); Inaba, Koji, c/o Ube Machinery Works, Oaza Kogushi, Ube-shi, Yamaguchi (JP); Matsunaka, Akio, c/o Ube Machinery Works, Oaza Kogushi, Ube-shi, Yamaguchi (JP)
(74) Representative: Jenkins, Peter David

(57) **Abstract**

Solidification and pneumatic transportation equipment for transporting stored soft mud and uniformly mixing stabilizer into the soft mud during the transportation comprises a transporting apparatus and a stabilizer adding apparatus. The transporting apparatus comprises a vertical screw conveyor, a pressure pump arranged at the downstream side of the vertical screw conveyor, a tube, and a flowmeter and an ejector for injecting compressed air which are disposed on the way of the tube. The stabilizer adding apparatus includes a stabilizer silo, a stabilizer feeder and vertical screw conveyor which follow the stabilizer silo and connect to the upstream side of the pressure pump.

## Description

The present invention relates to solidification and pneumatic transportation equipment for transporting soft mud, such as sludge extracted from a river, a lake, a harbor and so on and sludge or dewatered sludge in a sewage treatment plant, constantly adding stabilizer into the soft mud.

Conventionally, the kneading and solidification of such soft mud is performed by putting a certain volume of soft mud and the corresponding volume of stabilizer into a tank and kneading them by a kneader having agitating function which is mounted to the tank or manually mixing with a portable agitator uniformly, or by mixing the soft mud and the stabilizer in a vessel with construction equipment, such as a back hoe, which is manually operated.

The kneading methods mentioned above, such as the kneading in the tank and the kneading by operation of an agitator or the construction equipment, are all batch process with a problem of not only taking a lot of times but also offering poor working efficiency because different operations, such as a supply of the soft mud, addition of the stabilizer, the kneading, and the transportation, are each performed intermittently. Furthermore, there is also difficulty in corresponding quickly to every change in volume of soft mud to be treated so that a suitable amount of stabilizer corresponding to the volume of soft mud may not be added into the soft mud, with a result that the strength of the thus solidified mud varies. Therefore, there has been a felt need for method of automatically uniformly mixing the soft mud and the corresponding amount of the stabilizer efficiently.

In accordance with a first aspect of the present invention (I), the present invention provides solidification and pneumatic transportation equipment for transporting stored soft mud and uniformly mixing stabilizer into the soft mud during the transportation, which comprises a transporting apparatus and a stabilizer adding apparatus, wherein the transporting apparatus includes a vertical screw conveyor, a pressure pump arranged at the downstream side of the vertical screw conveyor, a tube, a flowmeter and an ejector for injecting compressed air which are disposed on the way of the tube, and the stabilizer adding apparatus includes a stabilizer silo, a stabilizer feeder and vertical screw conveyor which follow the stabilizer silo and connect to the upstream side of the pressure pump.

The speed of revolution of the vertical screw conveyor of the stabilizer adding apparatus is preferably variable in a range between 300 and 800 rpm.

The stabilizer feeder is preferably a variable speed rotary feeder.

The stabilizer adding apparatus preferably includes a check valve arranged immediately below the vertical screw conveyor to prevent the back flow of the stabilizer.

It is preferable for efficiently sucking up the stored soft mud that an agitator which rotates around a vertical axis is arranged in front of a suction opening of the vertical screw conveyor of the transporting apparatus to agitate and fluidize the soft mud.

In accordance with this aspect of the present invention, a suitable amount of stabilizer corresponding to the flow rate of soft mud is added to the soft mud just before the pressure pump on the way of the pneumatic transportation of the soft mud to a destination such as a filled ground, and the stabilizer and the soft mud are mixed by agitation during passing the pressure pump, during the pneumatic transportation, and during flowing through the tube, with a result that the soft mud and the stabilizer in the uniformly mixed state are transported to the destination.

The stabilizer adding apparatus is generally arranged on the way of the tube immediately before the pressure pump in the negative pressure state to facilitate the entering of the stabilizer into the travelling soft mud. However, when positive pressure is developed in the tube for some reason, the stabilizer adding apparatus can prevent a trouble due to the back pressure of the stabilizer by setting the speed of revolution of the vertical screw conveyor to a high value, employing as the stabilizer feeder a rotary feeder having the function of air-sealing, and/or providing the check valve immediately below the vertical screw conveyor.

The agitator which rotates around a vertical axis is arranged in front of the suction opening disposed at the lower end of the vertical screw conveyor to fluidize the soft mud around the suction opening of the vertical screw conveyor and to break a clod mixed in the soft mud into pieces, thereby facilitating the suction of the mud into the vertical screw conveyor.

In this solidification and pneumatic transportation equipment of the present invention the supply of soft mud, the send, the supply of stabilizer, the kneading, and the transportation to the destination are automatically operated in series so that a separate solidification and kneading process as used conventionally is not necessary. Therefore, efficient and uniform mixing and solidification of soft mud can be obtained. In addition, since the stabilizer is entered before the pressure pump, it is easy to feed the stabilizer into the soft mud and be sufficiently mixed with the soft mud, thereby offering still further uniform mixing.

The stabilizer adding apparatus has a function of preventing the back flow of the stabilizer due to the positive pressure in the tube, thereby ensuring the smooth supply of the coagulant.

In order to solve the problems as mentioned above the present invention provides in a second aspect (II) solidifcation and pneumatic transportation equipment for transporting stored soft mud and uniformly mixing stabilizer into the soft mud during the transportation, which comprises a mud constant feeding apparatus, a stabilizer constant feeding apparatus, a mud kneading apparatus, and a mud pneumatic transporting apparatus, wherein the mud constant feeding apparatus includes a mud storage tank and a vertical screw conveyor, the lower end of which is entered into the soft mud in the mud storage tank, the stabilizer constant feeding apparatus includes a stabilizer silo and a stabilizer feeder which follows the stabilizer silo and connects to the mud kneading apparatus, the mud kneading apparatus includes a vertical or horizontal double-shaft paddle mixer following the mud constant feeding apparatus, and the mud pneumatic transporting apparatus includes a pressure pump following the mud kneading apparatus, a tube, and an ejector for injecting compressed air arranged on the way of the tube.

The stabilizer feeder is preferably a variable speed rotary feeder.

Preferably, a check valve is arranged between the pressure pump and the ejector to prevent the back flow of the soft mud to feed the stabilizer in the volume corresponding to the flow rate of the soft mud.

For efficiently sucking up the stored soft mud, an agitator which rotates around a vertical axis is preferably arranged in front of a suction opening of the vertical screw conveyor to agitate and fluidize the soft mud.

According to this aspect (II) of the present invention, the soft mud stored in the storage tank is transported to a distant destination such as a filled ground, adding a suitable amount of stabilizer into the mud and sufficiently kneading them during the transportation so that the stabilizer and the soft mud in the sufficiently uniformly mixed state are transported to the destination.

That is, the soft mud stored in the mud storage tank is sucked up by the vertical screw conveyor to be discharged from the upper end of the vertical screw conveyor and then entered into the mud kneading apparatus where the mud is sufficiently kneaded with the stabilizer added from the stabilizer constant feeding apparatus. After that, the mud is pressurized by the pressure pump and then pneumatically transported to the distant destination through the tube by compressed air supplied from the ejector.

As the stabilizer feeder is a rotary feeder, it can prevent the splash of the stabilizer and the back flow of the stabilizer due to the back pressure since the stabilizer is fed in a sealed state.

A flowmeter for measuring the flow rate of soft mud may be arranged immediately after the vertical conveyor to facilitate the supply of the suitable amount of stabilizer corresponding to the flow rate of the soft mud. In addition, the check valve may be arranged between the pressure pump and the ejector to prevent the back flow of the soft mud in the tube.

The agitator which rotates around a vertical axis is arranged in front of the suction opening disposed at the lower end of the vertical screw conveyor to fluidize the soft mud around the suction opening of the vertical screw conveyor and to break a clod mixed in the soft mud into pieces, thereby facilitating the suction of the mud into the vertical screw conveyor.

As mentioned above, in this solidification and pneumatic transportation equipment of the present invention the supply of soft mud, the supply of stabilizer, the kneading, and the transportation to the destination are automatically operated in series so that efficient and uniform mixing and solidification of soft mud can be obtained. In addition, since the stabilizer is entered into the mud kneading apparatus, it is easy to feed the stabilizer into the soft mud and the stabilizer and the soft mud are sufficiently kneaded, thereby offering still further uniform mixing.

The stabilizer constant feeding apparatus is connected to the mud kneading apparatus so that the back flow of the stabilizer due to the positive pressure in the tube is absorbed by the soft mud in the mud kneading apparatus. Hence, the stabilizer constant feeding apparatus has a function of preventing the back flow of the stabilizer, thereby ensuring the smooth supply of the coagulant.

In order to solve the problems as mentioned above, the present invention provides in a third aspect (III) solidification and pneumatic transportation equipment for uniformly mixing stabilizer into stored soft mud and pneumatically transporting the soft mud through a tube, which comprises a mud storage tank for storing the soft mud having flow control means disposed at a discharge opening thereof, a mud kneading apparatus arranged immediately below the mud storage tank, a stabilizer feeding apparatus for feeding the stabilizer to the mud kneading apparatus, and a mud pneumatic transporting apparatus following the mud kneading apparatus, wherein the mud kneading apparatus includes a vertical or horizontal double-shaft paddle mixer, the stabilizer feeding apparatus includes a stabilizer silo and a stabilizer feeder which follows the stabilizer silo and connects to the mud kneading apparatus, and the mud pneumatic transporting apparatus includes a pressure pump following the mud kneading apparatus and an ejector for injecting compressed air arranged on the way of the tube.

Preferably, a check valve is arranged between the pressure pump and the ejector. It is also preferable that a flowmeter is arranged between the flow control means of the mud storage tank and the mud kneading apparatus to control the stabilizer feeder corresponding to the flow rate of the soft mud.

According to this aspect of the invention, the soft mud stored in the storage tank is transported to a distant destination such as a filled ground, adding a suitable amount of stabilizer into the mud and sufficiently kneading them during the transportation so that the stabilizer and the soft mud in the sufficiently uniformly mixed state are transported to the destination.

That is, the soft mud stored in the mud storage tank is discharged by gravity from a discharge opening at the lower end of the storage tank substantially constantly since the discharge amount of mud is controlled by flow control means and then entered into the mud kneading apparatus where the mud is sufficiently kneaded with the stabilizer added from the stabilizer feeding apparatus. After that, the mud is pressurized by the pressure pump and then pneumatically transported to the distant destination through the tube by compressed air supplied from the ejector.

As the check valve is arranged between the pressure pump and the ejector, it can prevent the back flow of the soft mud in the tube, thereby ensuring the smooth transportation of the soft mud.

In addition, the flow rate of the mud discharged from the mud storage tank is always measured by the flowmeter arranged after the flow control means to control the supply of the stabilizer corresponding to the changes in the flow rate of the mud, thereby making the soft mud mixed with the suitable amount of stabilizer in the fixed ratio.

As mentioned above, in this solidification and pneumatic transportation equipment of the present invention, the supply of soft mud, the supply of stabilizer, the kneading, and the transportation to the destination are automatically operated in series so that efficient and uniform mixing and solidification of soft mud can be obtained. In addition, since the stabilizer is entered into the mud kneading apparatus, it is easy to feed the stabilizer into the soft mud and the stabilizer and the soft mud are sufficiently kneaded, thereby offering still further uniform mixing.

The stabilizer feeding apparatus is connected to the mud kneading apparatus so that the back flow of the stabilizer due to the positive pressure in the tube is absorbed by the soft mud in the mud kneading apparatus. -Hence, the stabilizer feeding apparatus has a function of preventing the back flow of the stabilizer, thereby ensuring the smooth supply of the coagulant.

In order to solve the problems as mentioned above, the present invention provides in a fourth aspect (IV) solidification and pneumatic transportation equipment for uniformly mixing stabilizer into stored soft mud and pneumatically transporting the soft mud through a tube, which comprises a mud storage tank for storing the soft mud having flow control means disposed at a discharge opening thereof, a mud pneumatic transporting apparatus following the flow control means for pneumatically transporting the soft mud, and a stabilizer feeding apparatus for adding the stabilizer to the soft mud during the transportation of the soft mud, wherein the mud pneumatic transporting apparatus includes a pressure pump following the flow control means and an ejector for injecting compressed air arranged on the way of the tube, and the stabilizer feeding apparatus includes a stabilizer silo, a stabilizer feeder and vertical screw conveyor which follow the stabilizer silo and connect to the upstream side of the pressure pump.

Preferably, a check valve is arranged between the pressure pump and the ejector.

It is also preferable that a flowmeter is arranged between the flow control means of the mud storage tank and the mud kneading apparatus, and a control apparatus for controlling the stabilizer feeder is arranged to feed the stabilizer corresponding to the flow rate of the soft mud.

According to this aspect of the present invention, the soft mud stored in the storage tank is transported to a distant destination such as a filled ground, adding a suitable amount of stabilizer into the mud and sufficiently kneading them during the transportation so that the stabilizer and the soft mud in the sufficiently uniformly mixed state are transported to the destination.

That is, the soft mud stored in the mud storage tank is discharged by gravity from a discharge opening at the lower end of the storage tank substantially constantly since the discharge amount of mud is controlled by flow control means, and then sent to the pressure pump. On the way to the pressure pump, the stabilizer is fed into the soft mud. After that, the mud and the stabilizer are pressurized by the pressure pump, mixed sufficiently in the tube during transportation, and then pneumatically transported to the distant destination by compressed air supplied from the ejector.

As the check valve is arranged between the pressure pump and the ejector, it can prevent the back flow of the soft mud in the tube, thereby ensuring the smooth transportation of the soft mud.

In addition, the flow rate of the mud discharged from the mud storage tank is always measured by the flowmeter arranged after the flow control means to control the supply of the stabilizer corresponding to the changes in the flow rate of the mud, thereby making the soft mud mixed with the suitable amount of stabilizer in the fixed ratio.

As mentioned above, in this solidification and pneumatic transportation equipment of the present invention the supply of soft mud, the supply of stabilizer, the kneading, and the transportation to the destination are automatically operated in series so that a separate solidification and kneading process as used conventionally is not necessary. Therefore, efficient and uniform mixing and solidification of soft mud can be obtained. In addition, since the stabilizer is entered before the pressure pump, it is easy to feed the stabilizer into the soft mud and the stabilizer and the soft mud are sufficiently kneaded, thereby offering still further uniform mixing.

The stabilizer adding apparatus has a function of preventing the back flow of the stabilizer due to the positive pressure in the tube, thereby ensuring the smooth supply of the stabilizer.

Preferred embodiments of the present invention will now be described hereinbelow by way of example only with reference to the accompanying drawings, in which:-
Figs. 1 is an entire structural view of solidification and pneumatic transportation equipment according to a first embodiment of the present invention (I);
Fig. 2 is an entire side view of a vertical screw conveyor according to the first embodiment of the present invention (I);
Fig. 3 is a side view taken along a line A-A in Fig. 2;
Fig. 4 is a plan view taken along a line B-B in Fig. 2;
Fig. 5 is an entire structural view of solidification and pneumatic transportation equipment according to a second embodiment of the present invention (II);
Fig. 6 is a vertical sectional view showing in detail main elements of the solidification and pneumatic transportation equipment according to the second embodiment of the present invention (II);
Fig. 7 is a schematic view illustrating various types of stabilizer feeders employed by the present invention;
Fig. 8 is an entire structural view of solidification and pneumatic transportation equipment according to a third embodiment of the present invention (III);
Fig. 9 is a vertical sectional view showing in detail main elements of the solidification and pneumatic transportation equipment according to the third embodiment of the present invention (III);
Fig. 10 is a schematic view illustrating various types of embodiments of flow control means employed in the present invention;
Fig. 11 is an entire structural view of solidification and pneumatic transportation equipment according to a fourth embodiment of the present invention (IV); and
Fig. 12 is a vertical sectional view showing in detail main elements of the solidification and pneumatic transportation equipment according to the fourth embodiment of the present invention (IV).

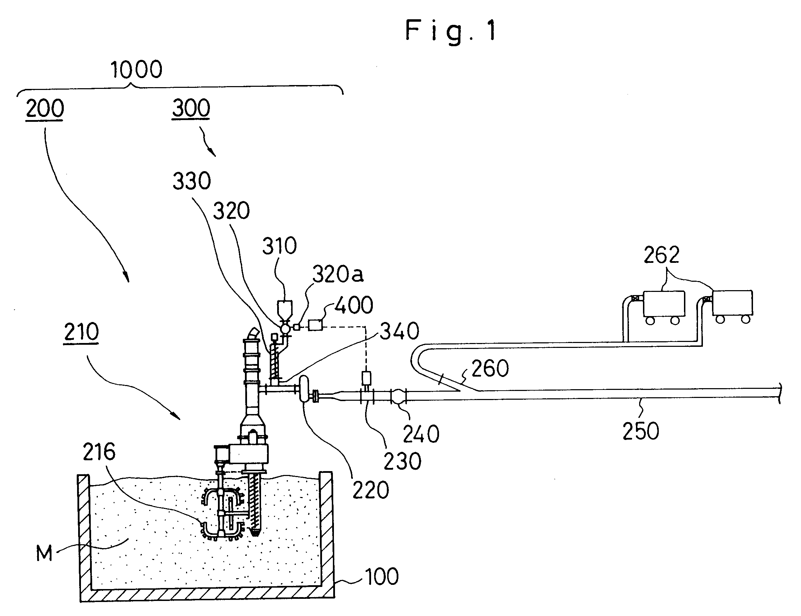

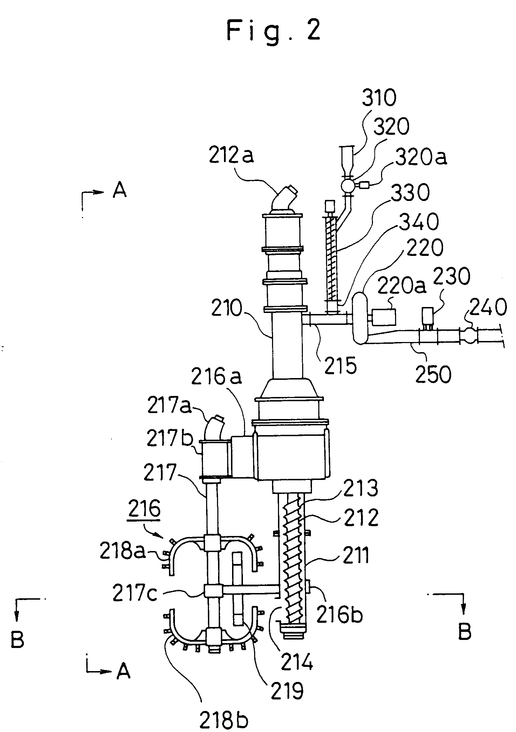

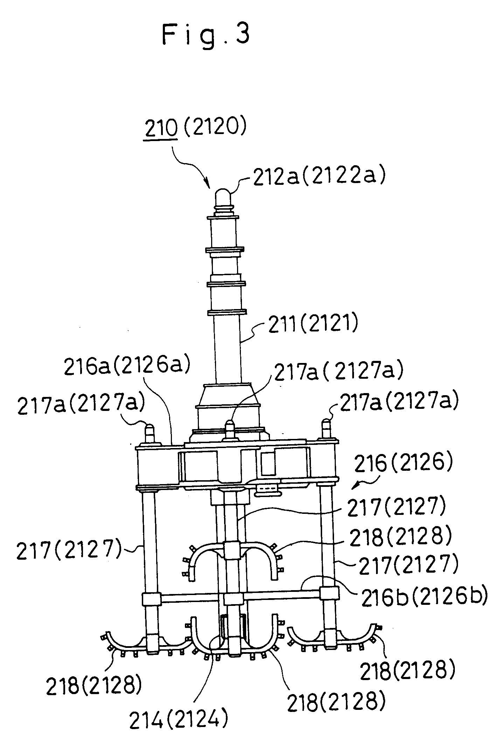

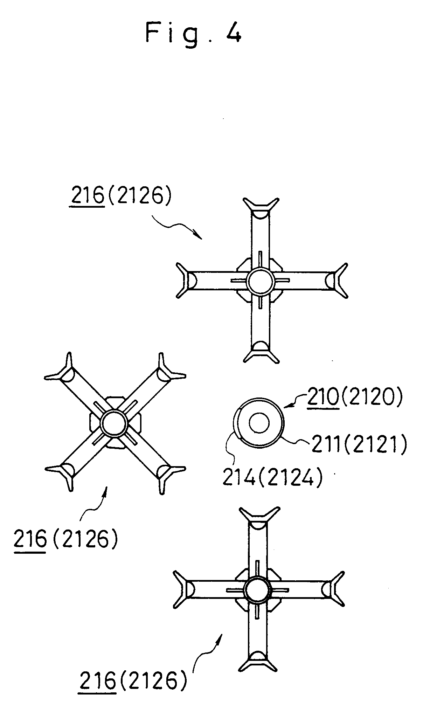

Hereinafter, an embodiment of the present invention (I) will be described in detail with reference to drawings attached hereto. Fig. 1 through Fig. 4 are illustrated with regard to the embodiment of the present invention (I), Fig. 1 is an entire structural view of solidification and pneumatic transportation equipment, Fig. 2 is an entire side view of a vertical screw conveyor, Fig. 3 is a side view taken along a line A-A in Fig. 2, and Fig. 4 is a plan view taken along a line B-B in Fig. 2.

As shown in Fig. 1, solidification and pneumatic transportation equipment 1000 for solidifying and transporting soft mud according to the present invention (I) is generally composed of a transporting apparatus 200 and a stabilizer adding apparatus 300. The transporting apparatus 200 is used to suck up solid mud M stored in a barge 100 or other storage tanks and then transport the mud M to a distant destination. In more detail, soft mud M sucked up by a vertical screw conveyor 210 is pressurized by a pressure pump 220, thus sent to a tube 250 through a flowmeter 230 and a check valve 240 and pneumatically transported using a plug transportation method by blowing compressed air supplied from compressors 262 through an ejector 260 disposed on the way of the tube 250.

The stabilizer adding apparatus 300 comprises a stabilizer silo 310, a stabilizer feeder 320 following the stabilizer silo 310, a vertical screw conveyor 330, and a check valve 340. The reason why the stabilizer adding apparatus 300 is connected to the tube 250 immediately before the pressure pump 220 is that the area immediately before the pressure pump 220 is usually in the negative pressure state because of the operation of the pressure pump 220 so that the stabilizer can be smoothly sucked into the tube 250 to be mixed with the soft mud M without a hitch. However, there are possibilities of allowing a positive pressure to be developed in the area even immediately before the pressure pump 220 due to an unexpected accident in operation. In this case, the stabilizer to be added may flow backward, with a trouble impeding the smooth supply of the stabilizer.

To prevent such a trouble, the check valve 340 is disposed under the vertical screw conveyor 330 to prevent the stabilizer from flowing backward and the vertical screw conveyor 330 capable of strongly transporting stabilizer to the tube 250 even when a slightly positive pressure is developed in the area is employed as transporting means.

The speed of revolution of the vertical screw conveyor 330 is variable in a range between 300 and 800 rpm so that the vertical screw conveyor 330 can strongly transport stabilizer s smoothly downwardly even when a positive pressure is developed in the area. To explain the reason of limiting the speed to the above mentioned numerical values, the lower limit is set to 300 rpm because a value lower than this value may allow stabilizer to flow backward, and the upper limit is set to 800 rpm because, even with a value higher than this value, the effect of preventing the backward flow is not improved against the positive pressure to be practically generated.

Though any type of device having a function of supplying powder stabilizer s constantly, such as a table feeder, a piston feeder, a belt feeder and the like, may be employed as the stabilizerfeeder 320, if considering the aforementioned prevention of backward flow, a rotary feeder which has a simple and compact structure and is capable of supplying stabilizer in the air-locked state is employed.

A preset value for supply volume of stabilizer corresponding to the flow rate of soft mud is previously stored in a control unit 400 which receives a detecting signal of the flowmeter 230 detecting the flow rate of the soft mud M. The control unit 400 thereby calculates the supply amount of stabilizer corresponding to actual flow rate of soft mud in operation and sends an operation command to a drive 320a of the stabilizerfeeder 320 to allow the stabilizer feeder 320 to supply a suitable amount of stabilizer immediately before a pressure pump 220 so that the stabilizer are mixed to the soft mud M by negative pressure of the pressure pump 220.

The vertical screw conveyor 210 according to the embodiment of this invention comprises a vertical cylindrical casing 211 and a rotary shaft 212 having a helical screw blade 213 disposed around the periphery of the rotary shaft 212 concentrically with the casing 211 as shown in Fig. 2 - Fig. 4. The rotary shaft 212 is rotatably supported by shaft bearings disposed at upper and lower ends of the casing 211 and is driven by a hydraulic motor 212a at the top thereof to rotate with its speed adjustable. Therefore, the vertical screw conveyor 210 discharges soft mud, sucked up through a suction opening 214 formed in the bottom thereof, from a discharge opening 215 and, as mentioned above, transports the soft mud to the pressure pump 220 to pressurize it. The speed of revolution of the vertical screw conveyor 210 is variable in a range between 400 and 1,200 rpm.

In order to facilitate transportation of soft mud to the suction opening 214 by agitating and fluidizing the soft mud around the suction opening 214 in the vertical screw conveyor 210, an agitator 216 is arranged in front of the suction opening 214.

The agitator 216 comprises a vertical agitator shaft 217 supported by shaft bearings 217b and 217c which are disposed at ends of supports 216a and 216b protruding horizontally from upper and lower positions of the casing 211, respectively, a pair of agitator blades 218 (218a and 218b) mounted to upper and lower positions of the agitator shaft 217, and a hydraulic motor 217a which drives the agitator shaft 217 to rotate the agitator blades 218 with its speed adjustable. One agitator 216 may be arranged in the front of the suction opening 214 and three agitators 216, 216, and 216 may be mounted, one of which is arranged in front of the suction opening 214 and two of which are arranged at both sides of the suction opening 214 as shown in Fig. 4. The agitator blades 218 comprises a plurality of arms (in Figs. 2 through 4, four arms) horizontally extending from the agitator shaft 217, each end of which is bent substantially at a right angle upwardly or downwardly, and a plurality of projections disposed roughly at intervals on the outer surfaces of the arms, each tip of which is formed like a sharp cutter. In case of using three agitators 216, 216, and 216, only the central agitator 216 may have the upper and lower blades 218a 218b and the right and left agitators 216 and 216 may have only lower blades 218b and 218b. The solidification and pneumatic transportation equipment 1000 with such three agitators is used for transporting soft mud, directly dredging it by the solidification and pneumatic transportation equipment 1000 in a dredging site and is, in particular, preferably used in case where water pollution due to the agitation is undesirable. Of cause, in an apparatus treating soft mud in a storage tank without possibility of such water pollution, the right and left agitators 216 and 216 may have both upper and lower agitating blades 218a, 218a and 218b, 218b. The agitators 216, 216, and 216 shown in Fig. 2 through Fig. 4 are driven by hydraulic motors 217a, 217a, and 217a, which are mounted at the tops thereof, respectively, so that each rotating direction and each speed of revolution thereof can be independently freely set.

There is another type of driving three agitators, the central agitator 216 of which is driven by the hydraulic motor 217a and the right and left agitators 216 and 216 of which are driven with a chain through sprocket wheels. In the agitators of this type, each rotating direction and each speed of revolution can not be independently set, but it can reduce the cost of the drive.

The speed of revolution of the agitator shaft 217 of the agitator 216 is usually variable in a range between 5 and 50 rpm, with increasing or decreasing the speed of revolution corresponding to the viscosity and/or the water content of soft mud.

Though an electromagnetic flowmeter, the principle of which is that, by applying magnetic field perpendicularly to the direction of flow, electromotive force induced according to the volume of soft mud passing therethrough is measured, is preferably employed as the flowmeter 230, another type of flowmeter may also be employed.

The stabilizer adding apparatus 300 is, as mentioned above, connected to the tube 250 between the discharge opening 215 of the vertical screw conveyor 210 and the pressure pump 220 to supply stabilizer in the volume corresponding to the flow rate of soft mud flowing through the tube 250. The stabilizer silo 310 stores cement or cement stabilizer in powder form. For the stabilizer feeder 320, any kind of feeder, such as rotary feeder, table feeder, piston feeder and the like, may be employed. The supply amount of stabilizer is adjusted according to the actual flow rate of soft mud measured by the flowmeter 230 by controlling the drive 320a. The stabilizer may be fed in powder form or in the form of slurries by adding water therein. The form of the stabilizer is decided according to the mixing rate due to the soil condition of soft mud. However, since it is cheaper that the stabilizer are fed in powder form, if there is no great difference between their efficiencies, it is better to use the stabilizer in powder form as they are. In case of feeding the stabilizer in powder form, the stabilizer constantly fed by the stabilizer feeder 320 are transported downwardly by the vertical screw conveyor 330. Though the stabilizer may be fed in powder form, it is sometimes better due to the soil condition of soft mud for uniformly mixing them with the soft mud that the stabilizer are fed in the form of slurries by adding water therein. In case of feeding the stabilizer in the form of slurries, the stabilizer feeder 320 has a storage tank with a mixer and a water supply line connected to the storage tank and then makes stabilizer in the form of slurries in the storage tank. The stabilizer in the form of slurries are discharged by a piston pump. The stabilizer are added at the ratio of 50 - 200 kg (usually 100 kg) to the soft mud of 1 m³ . According to the present invention, as mentioned above, the-stabilizer are fed into soft mud, pneumatically transported through the tube 250, immediately before the pressure pump 220 by the use of the negative pressure of the pressure pump 220 and sufficiently kneaded with the soft mud by the rotation of the blades of the pressure pump 220, and the stabilizer s are thus fed in powder form or in the form of slurries mixed with water in the volume corresponding to the flow rate of soft mud. Therefore, the stabilizer are suitably mixed with the soft mud during the plug transportation. After passing a fixed period (usually 2 - 7 days) after reaching the distant destination, the soft mud is solidified to have sufficiently high strength or more. In other words, the amount of stabilizer is decided according to the kind of soil in soft mud and/or after how many days and how much kgf/cm of strength will be desirable. It is obvious to one of skilled in the art that the greater stabilizer, the earlier and harder solidified soft mud. The uniform mixing of soft mud and stabilizer s according to this invention is successfully performed in the tube 250 during the plug transportation as mentioned above, the tube 250 requires at least 50m in length. It should be noted that the equipment of this invention can be equipped directly in a dredger so as to dredge soft mud such as sludge on the bottom of the sea, solidify the soft mud, and transport the soft mud to the distant destination.

This invention is characterized by that quite high uniformity in the kneading of stabilizer and soft mud can be obtained because the mixing and agitating are sufficiently performed with first mixing by the rotation of the pressure pump and with second mixing by repeating the generation and breaking of plugs in the tube during the plug transportation.

In addition, according to the present invention, the stabilizer adding apparatus 300 is capable of not only smoothly introducing stabilizer supplied from the stabilizer silo 310 into the tube 250 in the negative pressure state since the stabilizer are transported immediately before the pressure pump 220 by the vertical screw conveyor 330, but also preventing the stabilizer from flowing backward even when positive pressure is developed in the tube 250 for some reason, by setting the speed of revolution of the vertical screw conveyor 330 to 300 rpm or more, employing as the stabilizer feeder 320 a rotary feeder having the function of air-sealing, and/or providing the check valve 340 immediately below the vertical screw conveyor 330, thereby preventing a trouble due to the back pressure.

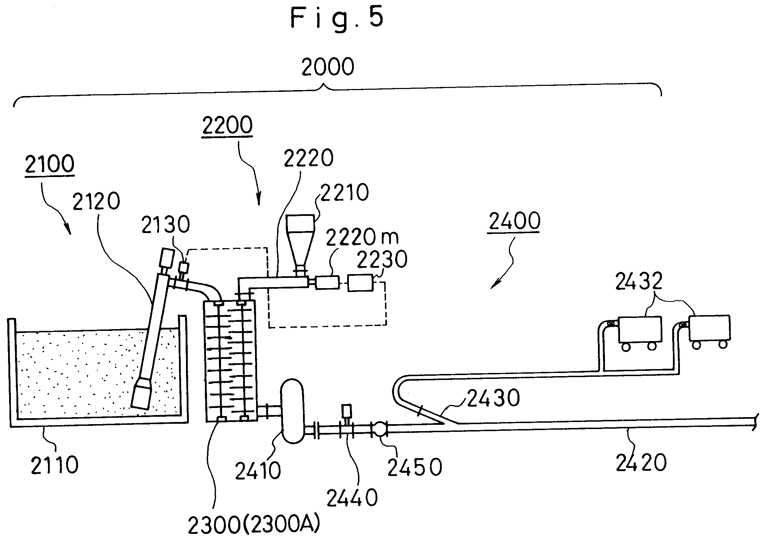

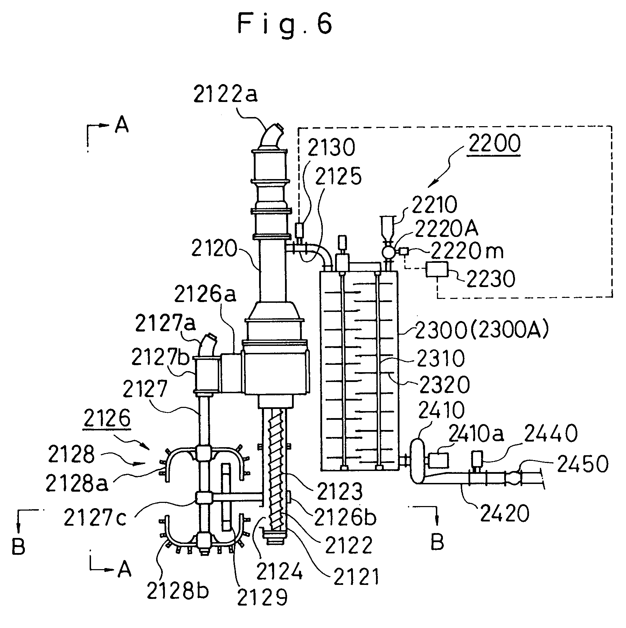

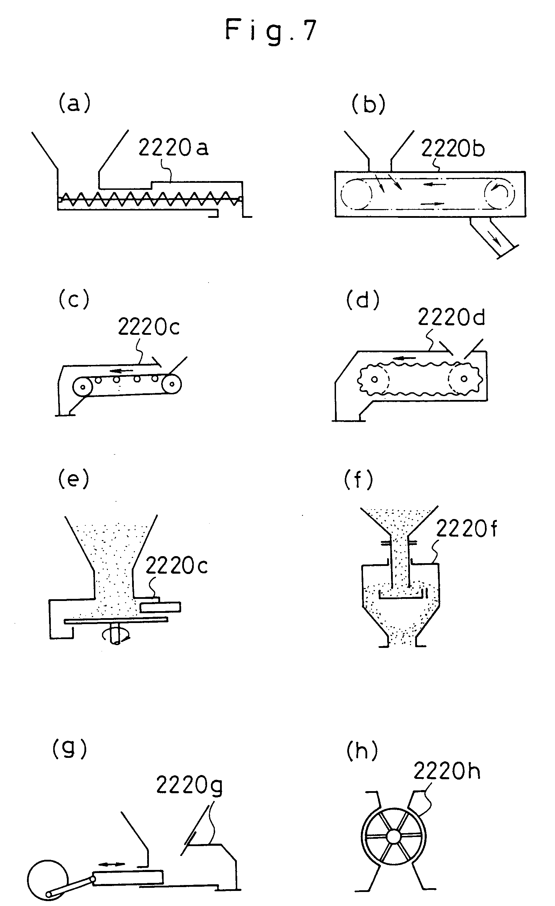

Hereinafter, an embodiment of the present invention (II) will be described in detail with reference to drawings attached hereto. Fig. 5 through Fig. 7 are illustrated with regard to the embodiment of the present invention (II), Fig. 5 is an entire structural view of solidification and pneumatic transportation equipment, Fig. 6 is a vertical sectional view showing in detail main elements of the solidification and pneumatic transportation equipment, and Fig. 7 is a schematic view illustrating various types of stabilizer feeders.

As shown in Fig. 5, solidification and pneumatic transportation equipment 2000 for solidifying and transporting soft mud according to the present invention (II) is generally composed of a mud constant feeding apparatus 2100, a stabilizer constant feeding apparatus 2200, mud kneading apparatus 2300, and a mud pneumatic transporting apparatus 2400. The mud constant feeding apparatus 2100 comprises a mud storage tank 2110 and a vertical screw conveyor 2120 which sucks up soft mud, with the lower portion thereof within the mud storage tank 2110. The vertical screw conveyor 2120 comprises a vertical cylindrical casing 2121 and a rotary shaft 2122 having a helical screw blade 2123 disposed around the periphery of the rotary shaft 2122 as shown in Fig. 6. The rotary shaft 2122 is rotatably supported by shaft bearings disposed at upper and lower ends of the casing 2121 and is driven by a hydraulic motor 2122a to suck up the soft mud through a suction opening 2124 and to discharge the soft mud from a discharge opening 2125. The flow rate of soft mud to be sucked is adjusted by operating the hydraulic motor 2122a to control the speed of revolution of the rotary shaft 2122.

The mud kneading apparatus 2300 is connected to the discharge opening 2125 of the vertical screw conveyor 2120 to follow it. Though a vertical double-shaft paddle mixer, as shown in Fig. 5 and Fig. 6, or a horizontal double-shaft paddle mixer is preferably employed as the mud kneading apparatus 2300, another type of kneading apparatus may also be employed. In the vertical double-shaft paddle mixer 2300A, two vertical rotary shafts 2310 are supported in parallel within the casing having an elliptical section so that the vertical rotary shafts 2310 can freely rotate in the direction opposite to each other. Each rotary shaft 2310 is provided with a plurality of paddle blades 2320 roughly at intervals. The paddle blades 2320 of the rotary shafts 2310 are arranged so that the tip of each paddle blade of one rotary shaft 2310 is positioned in the middle between adjacent blades of the other rotary shaft 2310. The horizontal double-shaft paddle mixer is one that the vertical double-shaft paddle mixer is laid horizontally, that is, two horizontal rotary shafts supported horizontally in parallel are each provided with a plurality of paddle blades arranged around the periphery thereof.

The stabilizer constant feeding apparatus 2200 is arranged above the mud kneading apparatus 2300 (the vertical double-shaft paddle mixer 2300A) as shown in Fig. 5. The stabilizer constant feeding apparatus 2200 comprises a stabilizer silo 2210 and a stabilizer feeder 2220 following the stabilizer silo 2210 to add a suitable amount of stabilizer in powder form. Any type of feeder which can feed a suitable amount of stabilizer in powder form, for example feeders of various types as shown in Fig. 7, may be employed as the stabilizer feeder 2220. Reference numeral 2220a designates a screw feeder, 2220b designates a chain feeder, 2220c designates a belt feeder, 2220d designates an apron feeder, 2220e designates a table feeder, 2220f designates a floatron (?), 2220g designates a plunger feeder, 2220h designates a rotary feeder. A flowmeter 2130 for measuring the flow rate of soft mud is disposed between the vertical conveyor 2120 and the mud kneading apparatus 2300. To feed the stabilizer s by the stabilizer feeder 2220 in the volume corresponding to the flow rate of the mud measured by the flowmeter 2130, a motor 2220m is controlled by a control apparatus 2230 to rotate at the speed of revolution to provide the stabilizer in the volume corresponding to the flow rate. The results are checked by a flowmeter 2440 arranged behind a pressure pump 2410.

It is preferable in view of handling of stabilizer in powder form that the stabilizer feeder 2220 can be structurally sealed by providing a sealing cover. In order to prevent the stabilizer from flowing backward due to the back pressure (positive pressure) from the mud kneading apparatus 2300 connected to the stabilizer feeder 2220, a rotary feeder 2220A provided with an air lock mechanism may be employed as the stabilizer feeder 2220 as shown in Fig. 6.

To prevent such a trouble due to the back pressure, a check valve may be disposed between the stabilizer feeder 2220 and the mud kneading apparatus 2300.

The description will now be made as regard to the mud pneumatic transporting apparatus 2400. The mud pneumatic transporting apparatus 2400 comprises a pressure pump 2410 following the mud kneading apparatus 2300, a tube 2420 for transporting soft mud after the pressure pump 2410, an ejector 2430 disposed on the way of the tube 2420 for supplying compressed air, and compressors 2432 as a supply source of compressed air. The soft mud sufficiently uniformly mixed with the stabilizer in the mud kneading apparatus 2300 is pressurized by the pressure pump 2410, transported downstream through the tube 2420, and further pneumatically transported by a plug transportation with compressed air injected from the ejector 2430 to a distant destination.

It is preferable that the flowmeter 2440 and the check valve 2450 are arranged between the pressure pump 2410 and the ejector 2430. The check valve 2450 prevents the back flow of the compressed air injected from the ejector 2430. The flowmeter 2440 measures the flow rate of soft mud after added with stabilizer as mentioned above. A preset value for supply amount of stabilizer corresponding to the flow rate of soft mud is previously stored in a control apparatus 2230 which receives a detecting signal of the flowmeter 2130 detecting the flow rate of the soft mud. The control apparatus 2230 thereby calculates the supply amount of stabilizer corresponding to actual flow rate of soft mud in operation and sends an operation command to a drive (motor) 2220m of the stabilizer feeder 2220 to allow the rotary feeder 2220A to supply a suitable amount of stabilizer to the mud kneading apparatus 2300.

The vertical screw conveyor 2120 according to the embodiment of this invention comprises the vertical cylindrical casing 2121 and the rotary shaft 2122 having the helical screw blade 2123 disposed around the periphery of the rotary shaft 2122 concentrically with the casing 2121 as shown in Fig. 3 and Fig. 4. The rotary shaft 2122 is rotatably supported by shaft bearings disposed at upper and lower ends of the casing 2121 and is driven by a hydraulic motor 2122a at the top thereof to rotate with its speed adjustable. Therefore, the vertical screw conveyor 2120 discharges soft mud, sucked up through the suction opening 2124 formed in the bottom thereof, from the discharge opening 2125 and, as mentioned above, sends the soft mud to the mud kneading apparatus 2300. The speed of revolution of the vertical screw conveyor 2120 is variable in a range between 400 and 1,200 rpm.

In order to facilitate transportation of soft mud to the suction opening 2124 by agitating and fluidizing the soft mud around the suction opening 2124 in the vertical screw conveyor 2120, an agitator 2126 is arranged in front of the suction opening 2124.

The agitator 2126 comprises a vertical agitator shaft 2127 supported by shaft bearings 2127b and 2127c which are disposed at ends of supports 2126a and 2126b protruding horizontally from upper and lower positions of the casing 2121, respectively, a pair of agitator blades 2128 (2128a and 2128b) mounted to the agitator shaft 2127, and a hydraulic motor 2127a which drives the agitator shaft 2120 to rotate the agitator blades 2128 with its speed adjustable. One agitator 2126 may be arranged in the front of the suction opening 2124 and, as shown in Fig. 4, three agitators 2126, 2126, and 2126 may be mounted, one of which is arranged in front of the suction opening 2124 and two of which are arranged at both sides of the suction opening 2124. The agitator blades 2128 comprises a plurality of arms (in Figs. 2 through 4, four arms) horizontally extending from the agitator shaft 2127, each end of which is bent substantially at a right angle upwardly or downwardly, and a plurality of projections disposed roughly at intervals on the outer surfaces of the arms, each tip of which is formed like a sharp cutter. In case of using three agitators 2126, 2126, and 2126, only the central agitator 2126 may have the upper and lower blades 2128a, 2128b and the right and left agitators 2126, 2126 may have only lower blades 2128b and 2128b. The solidification and pneumatic transportation equipment 2000 with such three agitators is used for transporting soft mud, directly dredging it by the solidification and pneumatic transportation equipment 2000 in a dredging site and is, in particular, preferably used in case where water pollution due to the agitation is undesirable. Of cause, in an apparatus treating soft mud in a storage tank without possibility of such water pollution, the right and left agitators 2126 and 2126 may have both upper and lower agitating blades 2128a, 2128a and 2128b, 2128b. The agitators 2126, 2126, and 2126 shown in Fig. 2 through Fig. 4 are driven by hydraulic motors 2127a, 2127a, and 2127a, which are mounted at the tops thereof, respectively, so that each rotating direction and each speed of revolution thereof can be independently freely set.

There is another type of driving three agitators, the central agitator 2126 of which is driven by the hydraulic motor 2127a and the right and left agitators 2126 and 2126 of which are driven with a chain through sprocket wheels. In the agitators of this type, each rotating direction and each speed of revolution can not be independently set, but it can reduce the cost of the drive.

The speed of revolution of the agitator shaft 2127 of the agitator 2126 is usually variable in a range between 5 and 50 rpm, with increasing or decreasing the speed of revolution corresponding to the viscosity and/or the water content of soft mud.

Though an electromagnetic flowmeter, the principle of which is that, by applying magnetic field perpendicularly to the direction of flow, electromotive force induced according to the volume of soft mud passing therethrough is measured, is preferably employed as the flowmeter 2240, another type of flowmeter may also be employed.

The stabilizer constant feeding apparatus 2200 is, as mentioned above, arranged on the top of the mud kneading apparatus 2300 and connected to the mud kneading apparatus 2300 to supply stabilizer in the volume corresponding to the flow rate of soft mud flowing within the mud kneading apparatus 2300. The stabilizer silo 2210 stores cement or cement stabilizer in powder form. For the stabilizer feeder 2220, any kind of feeder, such as rotary feeder, table feeder, piston feeder and the like, may be employed to control the motor 2220m according to the actual flow rate of soft mud measured by the flowmeter 2130 to adjust the supply amount of stabilizer. The stabilizer may be fed in powder form or in the form of slurries by adding water therein. The form of the stabilizer is decided according to the mixing rate due to the soil condition of soft mud. However, since it is cheaper that the stabilizer are fed in powder form, if there is no great difference between their efficiencies, it is better to use the stabilizer in powder form as they are. In case of feeding the stabilizer in powder form, the stabilizer constantly fed by the stabilizer feeder 2220 are transported downwardly after sufficiently kneaded in the mud kneading apparatus 2300. Though the stabilizer may be fed in powder form, it is sometimes better due to the soil condition of soft mud for uniformly mixing them with the soft mud that the stabilizer are fed in the form of slurries by adding water therein. In case of feeding the stabilizer in the form of slurries, the stabilizerfeeder 2220 has a storage tank with a mixer and a water supply line connected to the storage tank and then makes stabilizer in the form of slurries. The stabilizer in the form of slurries are discharged by a piston pump. The stabilizer are added at the ratio of 50 - 200 kg (usually 100 kg) to the soft mud of 1 m³. According to the present invention, as mentioned above, the stabilizer are previously fed to soft mud to be pneumatically transported through the tube 2420 and, sufficiently kneaded with the soft mud in the mud kneading apparatus 2300 to make them uniform, and further sufficiently kneaded by the rotation of the blades of the pressure pump 2410. The stabilizer are thus fed in powder form or in the form of slurries mixed with water in the volume corresponding to the flow rate of soft mud. Therefore, the stabilizer are suitably mixed with the soft mud during the plug transportation. After passing a fixed period (usually 2 - 7 days) after reaching the distant destination, the soft mud is solidified to have sufficiently high strength or more. In other words, the amount of stabilizer is decided according to the kind of soil in soft mud and after how many days and/or how much kgf/cm of strength will be desirable. It is obvious to one of skilled in the art that the greater stabilizer, the earlier and harder solidified soft mud. Since the uniform mixing of soft mud and stabilizer according to this invention is previously sufficiently performed in the mud kneading apparatus 2300 and further successfully performed in the tube 2420 during the plug transportation as mentioned above, the length of the tube 2420 can be further shorter than that of the conventional one which needs at least 50 m. It should be noted that the equipment of this invention can be equipped directly in a dredger so as to dredge soft mud such as sludge on the bottom of sea, solidify the soft mud, and transport the soft mud to the distant destination.

This invention is characterized by that quite high uniformity in the kneading of stabilizer and soft mud can be obtained because the mixing and agitating are sufficiently performed with second mixing by the rotation of the pressure pump after first mixing in the mud kneading apparatus 2300 and with third mixing by repeating the generation and breaking of plugs in the tube during the plug transportation.

In addition, in the stabilizer feeding apparatus 2200 of this invention, the stabilizer supplied from the stabilizer silo 2210 are mixed with the mud in the mud kneading apparatus 2300 and sent into the tube 2420 before the pressure pump 2410 by the head pressure of soft mud in the mud kneading apparatus 2300. Therefore, the stabilizer feeding apparatus 2200 is capable of not only smoothly introducing the stabilizer into the tube 2420 in the negative pressure state, but also preventing the stabilizer from flowing backward even when positive pressure is developed in the tube 2420 for some reason, by employing as the stabilizer feeder 2220 a rotary feeder having the function of air-sealing, and/or providing the check valve immediately below the stabilizer feeder 2220, thereby preventing a trouble due to the back pressure.

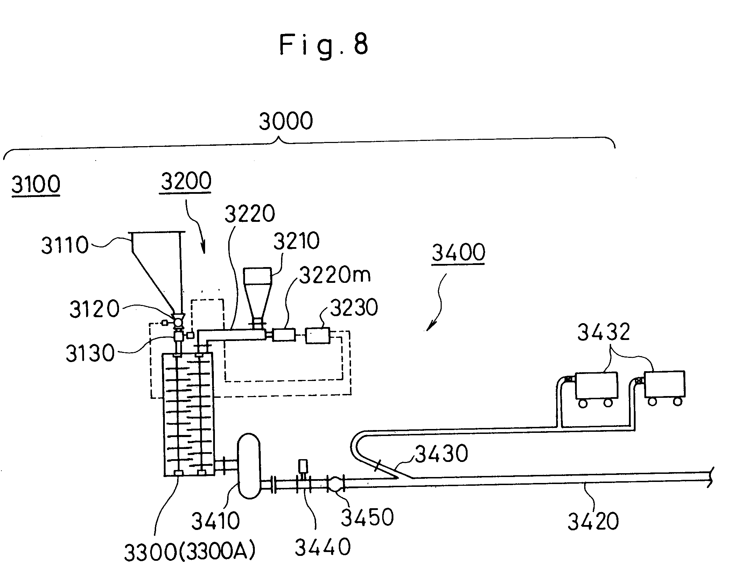

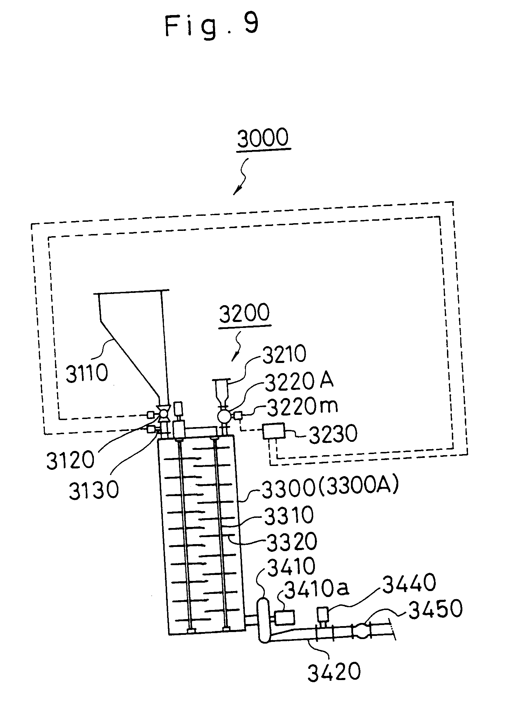

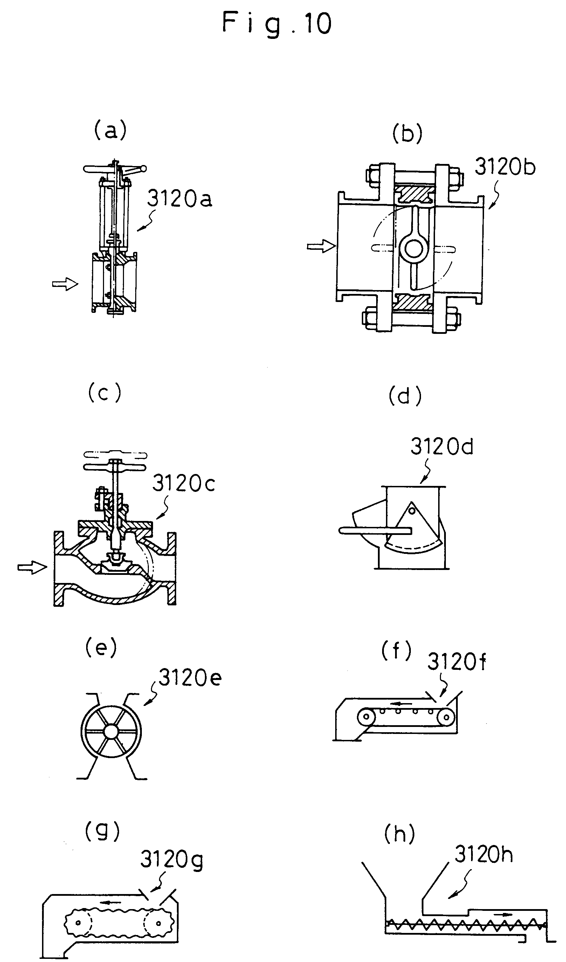

Hereinafter, an embodiment of the present invention (III) will be described in detail with reference to drawings attached hereto. Fig. 8 through Fig. 10 are illustrated with regard to the embodiment of the present invention (III), Fig.8 is an entire structural view of solidification and pneumatic transportation equipment, Fig. 9 is a vertical sectional view showing in detail main elements of the solidification and pneumatic transportation equipment, and Fig. 10 is a schematic view illustrating various types of flow control means.

As shown in Fig. 8, solidification and pneumatic transportation equipment 3000 for solidifying and transporting soft mud according to the present invention (III) comprises a mud storage tank 3110 made of steel plates and provided with flow control means 3120 disposed on a discharge opening thereof, a mud kneading apparatus 3300 following the mud storage tank 3110, a mud pneumatic transporting apparatus 3400, and a stabilizer feeding apparatus 3200 for adding stabilizer to the mud kneading apparatus 3300. One of flow control means of various types as shown in Fig. 10 is employed as the flow control means 3120. That is, a valve, such as a sluice gate valve 3120a, a butterfly valve 3120b, and a globe valve 3120c, or a cut-off gate 3120d, or a feeder such as a rotary feeder 3120e, a belt feeder 3120f, an apron feeder 3120g, and a screw feeder 3120h, may be employed. An apparatus comprising the mud storage tank 3110 and the flow control means 3120 is referred to as a mud feeding apparatus 3100.

The mud kneading apparatus 3300 is arranged immediately below a flowmeter 3130 following the flow control means 3120. Though a vertical double-shaft paddle mixer, as shown in Fig. 8 and Fig. 9, or a horizontal double-shaft paddle mixer is preferably employed as the mud kneading apparatus 3300, another type of kneading apparatus may also be employed. In the vertical double-shaft paddle mixer 3300A, two vertical rotary shafts 3310 are supported in parallel within the casing having an elliptical section so that the vertical rotary shafts 3310 can freely rotate in the direction opposite to each other. Each rotary shaft 3310 is provided with a plurality of paddle blades 3320 roughly at intervals. The paddle blades 3320 of the rotary shafts 3310 are arranged so that the tip of each paddle blade of one rotary shaft 3310 is positioned in the middle between adjacent blades of the other rotary shaft 3310. The horizontal double-shaft paddle mixer is one that the vertical double-shaft paddle mixer is laid horizontally, that is, two horizontal rotary shafts supported horizontally in parallel are each provided with a plurality of paddle blades arranged around the periphery thereof.

The stabilizer feeding apparatus 3200 is arranged above the mud kneading apparatus 3300 (the vertical double-shaft paddle mixer 3300A) as shown in Fig. 8 and Fig. 9. The stabilizer feeding apparatus 3200 comprises a stabilizer silo 3210 and a stabilizer feeder 3220 following the stabilizer silo 3210 to add a suitable amount of stabilizer in powder form to the soft mud in the mud kneading apparatus 3300. Any type of feeder which can feed a suitable amount of stabilizer in powder form, for example feeders of various types as shown in Fig. 7, may be employed as the stabilizer feeder 3220. A flowmeter 3130 for measuring the flow rate of soft mud is disposed between the flow control means 3120 and the mud kneading apparatus 3300. To feed the stabilizer by the stabilizer feeder 3220 in the volume corresponding to the flow rate of the soft mud measured by the flowmeter 3130, a motor 3220m is controlled by a control apparatus 3230 to rotate at the speed of revolution to provide the stabilizer in the volume corresponding to the flow rate. The results are checked by a flowmeter 3440 arranged behind a pressure pump 3410.

It is preferable in view of handling of stabilizer in powder form that the stabilizer feeder 3220 can be structurally sealed by providing a sealing cover. In order to prevent the stabilizer from flowing backward due to the back pressure (positive pressure) from the mud kneading apparatus 3300 connected to the stabilizer feeder 3220, a rotary feeder 3220A provided with an air lock mechanism may be employed as the stabilizerfeeder 3220 as shown in Fig. 9.

To prevent such a trouble due to the back pressure, a check valve may be disposed between the stabilizer feeder 3220 and the mud kneading apparatus 3300.

The description will now be made as regard to the mud pneumatic transporting apparatus 3400. The mud pneumatic transporting apparatus 3400 comprises a pressure pump 3410 following the mud kneading apparatus 3300, a tube 3420 for transporting soft mud after the pressure pump 3410, an ejector 3430 disposed on the way of the tube 3420 for supplying compressed air, and compressors 3432 as a supply source of compressed air. The soft mud sufficiently uniformly mixed with the stabilizer in the mud kneading apparatus 3300 is pressurized by the pressure pump 3410, transported downstream through the tube 3420, and further pneumatically transported by a plug transportation with compressed air injected from the ejector 3430 to a distant destination.

It is preferable that the flowmeter 3440 and the check valve 3450 are arranged between the pressure pump 3410 and the ejector 3430. The check valve 3450 prevents the back flow of the compressed air injected from the ejector 3430. The flowmeter 3440 measures the flow rate of soft mud after added with stabilizer as mentioned above. A preset value for supply amount of stabilizer corresponding to the flow rate of soft mud is previously stored in a control apparatus 3230 which receives a detecting signal of the flowmeter 3130 arranged after the flow control means 3120 for detecting the flow rate of the soft mud. The control apparatus 3230 thereby calculates the supply amount of stabilizer corresponding to actual flow rate of soft mud in operation and sends an operation command to a drive (motor) 3220m of the stabilizer feeder 3220 to allow the rotary feeder 3220A to supply a suitable amount of stabilizer to the mud kneading apparatus 3300.

The stabilizer feeding apparatus 3200 is, as mentioned above, arranged on the top of the mud kneading apparatus 3300 and connected to the mud kneading apparatus 3300 to supply stabilizer in the volume corresponding to the flow rate of soft mud flowing within the mud kneading apparatus 3300. The stabilizer silo 3210 stores cement or cement stabilizer in powder form. For the stabilizer feeder 3220, as mentioned above, any kind of feeder, such as rotary feeder, table feeder, piston feeder and the like as shown in Fig. 4, may be employed to control the motor 3220m according to the actual flow rate of soft mud measured by the flowmeter 3130 to adjust the supply amount of stabilizer. The stabilizer may be fed in powder form or in the form of slurries by adding water therein. The form of the stabilizer is decided according to the mixing rate due to the soil condition of soft mud. However, since it is cheaper that the stabilizer are fed in powder form, if there is no great difference between their efficiencies, it is better to use the stabilizer in powder form as they are. In case of feeding the stabilizer in powder form, the stabilizer constantly fed by the stabilizer feeder 3220 are transported downwardly after sufficiently kneaded in the mud kneading apparatus 3300. Though the stabilizer may be fed in powder form, it is sometimes better due to the soil condition of soft mud for uniformly mixing them with the soft mud that the stabilizer are fed in the form of slurries by adding water therein. In case of feeding the stabilizer in the form of slurries, the stabilizer feeder 3220 has a storage tank with a mixer and a water supply line connected to the storage tank and then makes stabilizer in the form of slurries. The stabilizer in the form of slurries are discharged by a piston pump. The stabilizer are added at the ratio of 50 - 200 kg (usually 100 kg) to the soft mud of 1 m³. According to the present invention, as mentioned above, the stabilizer are previously fed to soft mud pneumatically transported through the tube 3420, and sufficiently kneaded with the soft mud in the mud kneading apparatus 3300 to make them uniform, further sufficiently kneaded by the rotation of the blades of the pressure pump 3410. The stabilizer are thus fed in powder form or in the form of slurries mixed with water in the volume corresponding to the flow rate of soft mud. Therefore, the stabilizer are suitably mixed with the soft mud during the plug transportation. After passing a fixed period (usually 2 - 7 days) after reaching the distant destination, the soft mud is solidified to have sufficiently high strength or more. In other words, the amount of stabilizer is decided according to the kind of soil in soft mud and after how many days and/or how much kgf/cm2 of strength will be desirable. It is obvious to one of skilled in the art that the greater stabilizer, the earlier and harder solidified soft mud. Since the uniform mixing of soft mud and stabilizer according to this invention is previously sufficiently performed in the mud kneading apparatus 3300 and further successfully performed in the tube 3420 during the plug transportation as mentioned above, the length of the tube 3420 can be further shorter than that of the conventional one which needs at least 50 m. It should be noted that the equipment of this invention can be equipped directly in a dredger so as to dredge soft mud such as sludge on the bottom of sea, solidify the soft mud, and transport the soft mud to the distant destination.

This invention is characterized by that quite high uniformity in the kneading of stabilizer and soft mud can be obtained because the mixing and agitating are sufficiently performed with second mixing by the rotation of the pressure pump after first mixing in the mud kneading apparatus 3300 and with third mixing by repeating the generation and breaking of plugs in the tube during the plug transportation.

In addition, in the stabilizer feeding apparatus 3200 of this invention, the stabilizer supplied from the stabilizer silo 3210 are mixed with the mud in the mud kneading apparatus 3300 and sent into the tube 3420 before the pressure pump 3410 by the head pressure of soft mud in the mud kneading apparatus 3300. Therefore, the stabilizer feeding apparatus 3200 is capable of not only smoothly introducing the stabilizer into the tube 3420 in the negative pressure state, but also preventing the stabilizer from flowing backward even when positive pressure is developed in the tube 3420 for some reason, by employing as the stabilizer feeder 3220 a rotary feeder having the function of air-sealing, and/or providing the check valve immediately below the stabilizer feeder 3220, thereby preventing a trouble due to the back pressure.

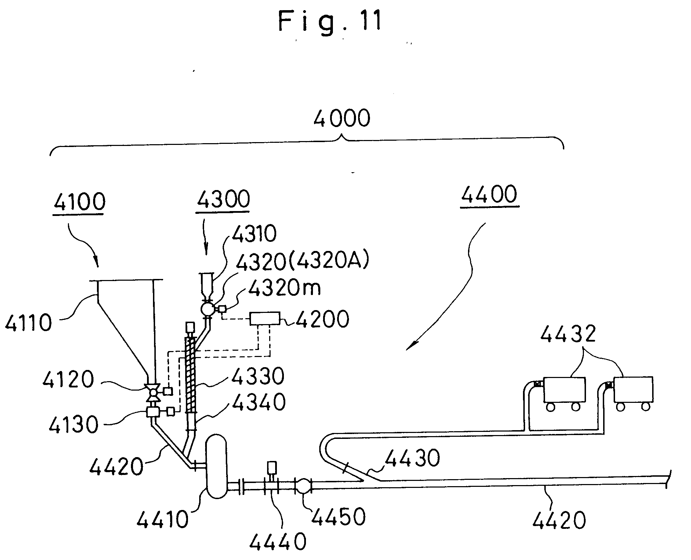

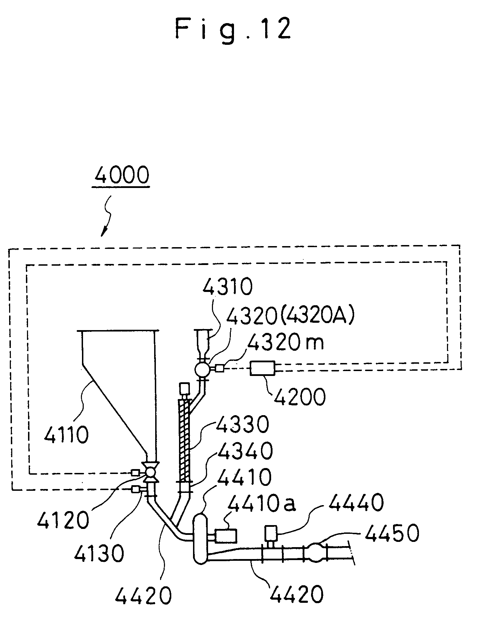

Hereinafter, an embodiment of the present invention (IV) will be described in detail with reference to drawings attached hereto. Fig. 11 and Fig. 12 are illustrated with regard to the embodiment of the present invention (IV), Fig. 11 is an entire structural view of solidification and pneumatic transportation equipment, and Fig. 12 is a vertical sectional view showing in detail main elements of the solidification and pneumatic transportation equipment.

As shown in Fig. 12, solidification and pneumatic transportation equipment 4000 for solidifying and transporting soft mud according to the present invention (IV) comprises a mud feeding apparatus having a mud storage tank 4110 made of steel plates and flow control means 4120 disposed on a discharge opening the mud storage tank 4110, a mud pneumatic transporting apparatus 4400 following the mud storage tank 4110, and a stabilizer feeding apparatus 4300 for adding stabilizer to the upstream of the mud pneumatic transporting apparatus 4400. The flow control means 4120 is selected from flow control means of various types as illustrated in Fig. 10. An apparatus comprising the mud storage tank 4110 and the flow control means 4120 is referred to as the mud feeding apparatus 4100. A flowmeter 4130 is arranged after the flow control means 4120.

The stabilizer feeding apparatus 4300 is arranged on the way from the mud feeding apparatus 4100, which comprises the mud storage tank 4110, the flow control means 4120, and the flowmeter 4130, to a pressure pump 4410 of the mud pneumatic transporting apparatus 4400 which will be described later, as shown in Fig. 11 and Fig. 12. The stabilizer feeding apparatus 4300 comprises a stabilizer silo 4310 for storing stabilizer, a stabilizer feeder 4320 following the stabilizersilo 4310, a vertical screw conveyor 4330, and a check valve 4340. The reason why the stabilizer feeding apparatus 4300 is connected to the tube 4420 immediately before the pressure pump 4410 is that the area immediately before the pressure pump 4410 is usually in the negative pressure state because of the operation ofthe pressure pump 4410 so that the stabilizer can be smoothly sucked into the tube 4420 to be mixed with the soft mud without a hitch. However, there are possibilities of allowing a positive pressure to be developed in the area even immediately before the pressure pump 4410 due to an unexpected accident in operation. In this case, the stabilizer to be added may flow backward, with a trouble impeding the smooth supply of the stabilizer.

To prevent such a trouble due to the back pressure, a check valve 4340 may be disposed under the vertical screw conveyor 4330 to prevent the stabilizer from flowing backward and the vertical screw conveyor 4330 capable of strongly transporting stabilizer to the tube 4420 even when a slightly positive pressure is developed in the area may be employed as transporting means.

The speed of revolution of the vertical screw conveyor 4330 is variable in a range between 300 and 800 rpm so that the vertical screw conveyor 4330 can strongly transport stabilizer smoothly downwardly even when a positive pressure is developed. To explain the reason of limiting the speed to the above mentioned numerical values, the lower limit is set to 300 rpm because a value lower than this value may allow stabilizer to flow backward, and the upper limit is set to 800 rpm because, even with a value higher than this value, the effect of preventing the backward flow is not improved against the positive pressure to be practically generated.

Though any type of device having a function of supplying powder stabilizer constantly, such as a table feeder, a piston feeder, a belt feeder and the like as shown in Fig. 7, may be employed as the stabilizerfeeder 4320, if considering the aforementioned prevention of backward flow, a rotary feeder which has a simple and compact structure and is capable of supplying stabilizer in the air-locked state is employed.

A flowmeter 4130 for measuring the flow rate of soft mud is disposed immediately below the flow control means 4120. To feed the stabilizer by the stabilizer feeder 4320 in the volume corresponding to the flow rate measured by the flowmeter 4130, a motor 4320m is controlled by a control apparatus 4200 to rotate at the speed of revolution to provide the stabilizer in the volume corresponding to the flow rate. The results are checked by a flowmeter 4440 arranged behind a pressure pump 4410.

It is preferable in view of handling of stabilizer in powder form that the stabilizer feeder 4320 can be structurally sealed by providing a sealing cover. In order to prevent the stabilizer from flowing backward due to the back pressure (positive pressure) from the mud storage tank connected to the stabilizer feeder 4320, a rotary feeder 4320A provided with an air lock mechanism may be employed as the stabilizer feeder 4320 as shown in Fig. 12.

To prevent such a trouble due to the back pressure, a check valve 4340 may be disposed immediately below the vertical screw conveyor 4330.

The description will now be made as regard to the mud pneumatic transporting apparatus 4400. The mud pneumatic transporting apparatus 4400 comprises a pressure pump 4410 following the mud feeding apparatus 4100, a tube 4420 for transporting soft mud after the pressure pump 4410, an ejector 4430 disposed on the way of the tube 4420 for supplying compressed air, and compressors 4432 as a supply source of compressed air. The soft mud which has been mixed with the stabilizer by the stabilizerfeeding apparatus 4300 is pressurized and mixed sufficiently by the pressure pump 4410, transported downstream through the tube 4420, and further pneumatically transported by a plug transportation with compressed air injected from the ejector 4430 to a distant destination.

It is preferable that the flowmeter 4440 and the check valve 4450 are arranged between the pressure pump 4410 and the ejector 4430. The check valve prevents the back flow of the compressed air injected from the ejector 4430. The flowmeter 4440 measures the flow rate of soft mud after added with stabilizer as mentioned above. A preset value for supply amount of stabilizer corresponding to the flow rate of soft mud is previously stored in a control apparatus 4200 which receives a detecting signal of the flowmeter 4130 arranged after the flow control means 4120 for detecting the flow rate of the soft mud. The control apparatus 4200 thereby calculates the supply amount of stabilizer corresponding to actual flow rate of soft mud in operation and sends an operation command to a drive (motor) 4320m of the stabilizer feeder 4320 to allow the stabilizer feeder to supply a suitable amount of stabilizer to the vertical screw conveyor 4330.

The stabilizer feeding apparatus 4300 is, as mentioned above, connected to the tube 4420 between the mud feeding apparatus 4100 and the mud pneumatic transporting apparatus 4400 to supply stabilizer in the volume corresponding to the flow rate of soft mud flowing through the tube 4420. The stabilizer silo 4310 stores cement or cement stabilizer in powder form. For the stabilizerfeeder 4320, as mentioned above, any kind of feeder, such as rotary feeder, table feeder, piston feeder and the like as shown in Fig. 7, may be employed to control the motor 4320m according to the actual flow rate of soft mud measured by the flowmeter 4130 to adjust the supply amount of stabilizer. The stabilizer may be fed in powder form or in the form of slurries by adding water therein. The form of the stabilizer is decided according to the mixing rate due to the soil condition of soft mud. However, since it is cheaper that the stabilizer are fed in powder form, if there is no great difference between their efficiencies, it is better to use the stabilizer in powder form as they are. In case of feeding the stabilizer in powder form, the stabilizer constantly fed by the stabilizer feeder 4320 are transported downwardly forcibly by the vertical screw conveyor 4330. Though the stabilizer may be fed in powder form, it is sometimes better due to the soil condition of soft mud for uniformly mixing them with the soft mud that the stabilizer are fed in the form of slurries by adding water therein.In case of feeding the stabilizer in the form of slurries, the stabilizer feeder 4320 has a storage tank with a mixer and a water supply line connected to the storage tank and then makes stabilizer in the form of slurries. The stabilizer in the form of slurries are discharged by a piston pump. The stabilizer are added at the ratio of 50 - 200 kg (usually 100 kg) to the soft mud of 1 m3. According to the present invention, as mentioned above, to archive the uniform mixing of stabilizer and soft mud by previously feeding the stabilizer to soft mud pneumatically transported through the tube 4420 and sufficiently kneading them to make them uniform, the stabilizer and the soft mud are discharged after sufficiently mixed during the pneumatic transportation by the rotation of the blades of the pressure pump 4410 and further uniformly mixed during the plug transportation. After passing a fixed period (usually 2 - 7 days) after reaching the distant destination, the soft mud is solidified to have sufficiently high strength or more. In other words, the volume of stabilizer is decided according to the kind of soil in soft mud and after how many days and/or how much kgf/cm2 of strength will be desirable. It is obvious to one of skilled in the art that the greater stabilizer, the earlier and harder solidified soft mud. Since the uniform mixing of soft mud and stabilizer according to this invention is previously sufficiently performed in the pressure pump 4410 and further successfully performed in the tube 4420 during the plug transportation as mentioned above, the length of the tube 4420 can be further shorter than that of the conventional one which needs at least 50 m. It should be noted that the equipment of this invention can be equipped directly in a dredger so as to dredge soft mud such as sludge on the bottom of sea, solidify the soft mud, and transport the soft mud to the distant destination.

This invention is characterized by that quite high uniformity in the kneading of stabilizer and soft mud can be obtained because the mixing and agitating are sufficiently performed with first mixing by the rotation of the pressure pump and with second mixing by repeating the generation and breaking of plugs in the tube during the plug transportation.

In addition, in the stabilizer feeding apparatus 4300 of this invention, the stabilizer supplied from the stabilizer silo 4310 are mixed with the mud in the vertical screw conveyor 4330 and sent into the tube 4420 before the pressure pump 4410 by the head pressure of soft mud in the mud kneading apparatus 4300. Therefore, the stabilizer feeding apparatus 4300 is capable of not only smoothly introducing the stabilizer into the tube 4420 in the negative pressure state, but also preventing the stabilizer from flowing backward even when positive pressure is developed in the tube 4420 for some reason. In addition, it can prevent the back flow of the stabilizer by employing as the stabilizer feeder 4320 a rotary feeder having the function of air-sealing, or disposing the check valve immediately below the stabilizer feeder 4320, thereby preventing a trouble due to the back pressure.

## Claims

1. Solidification and pneumatic transportation equipment for transporting stored soft mud and uniformly adding stabilizer into the soft mud during the transportation, comprising a transporting apparatus and a stabilizer adding apparatus,
said transporting apparatus including a vertical screw conveyor, a pressure pump arranged at the downstream side of said vertical screw conveyor, a tube, a flowmeter and an ejector for injecting compressed air which are disposed on the way of said tube, and
said stabilizer adding apparatus including a stabilizer silo, a stabilizer feeder and vertical screw conveyor which follow said stabilizer silo and connect to the upstream side of said pressure pump.

2. Solidification and pneumatic transportation equipment as claimed in claim 1, wherein the speed of revolution of said vertical screw conveyor of said stabilizer adding apparatus is variable in a range between 300 and 800 rpm.

3. Solidification and pneumatic transportation equipment as claimed in claim 1 or claim 2, wherein said stabilizer feeder is a variable speed rotary feeder.

4. Solidification and pneumatic transportation equipment as claimed in any one of claims 1, 2, and 3, wherein said stabilizer adding apparatus includes a check valve arranged immediately below said vertical screw conveyor.

5. Solidification and pneumatic transportation equipment as claimed in any one of claims 3 and 4, further comprising an agitator which rotates around a vertical axis and is arranged in front of a suction opening of said vertical screw conveyor of said transporting apparatus to agitate and fluidize the soft mud.

6. Solidification and pneumatic transportation equipment for transporting stored soft mud and uniformly mixing stabilizer into the soft mud during the transportation, comprising a mud constant feeding apparatus, a stabilizer constant feeding apparatus, a mud kneading apparatus, and a mud pneumatic transporting apparatus,
said mud constant feeding apparatus including a mud storage tank and a vertical screw conveyor, the lower end of which is entered into soft mud in said mud storage tank,
said stabilizer constant feeding apparatus including a stabilizer silo and a stabilizer feeder which follows said stabilizer silo and connects to said mud kneading apparatus,
said mud kneading apparatus including a vertical or horizontal double-shaft paddle mixer following said mud constant feeding apparatus, and
said mud pneumatic transporting apparatus including a pressure pump following said mud kneading apparatus, a tube, and an ejector for injecting compressed air arranged on the way of said tube.

7. Solidification and pneumatic transportation equipment as claimed in claim 6, wherein said stabilizer feeder is a variable speed rotary feeder.

8. Solidification and pneumatic transportation equipment as claimed in claim 6 or claim 7, further comprising a check valve arranged between said pressure pump and said ejector, a flowmeter for soft mud arranged between said vertical screw conveyor and said mud kneading apparatus, and a control apparatus for controlling said stabilizer feeder to feed the stabilizer corresponding to the flow rate of the soft mud.

9. Solidification and pneumatic transportation equipment as claimed in any one of claims 6, 7 and 8, wherein an agitator which rotates around a vertical axis and is arranged in front of a suction opening of said vertical screw conveyor of said mud constant feeding apparatus to agitate and fluidize the soft mud.

10. Solidification and pneumatic transportation euipment for uniformly mixing stabilizer into stored soft mud and pneumatically transporting the soft mud through a tube, comprising a mud storage tank for storing the soft mud having flow control means disposed at a discharge opening thereof, a mud kneading apparatus arranged immediately below said mud storage tank, a stabilizer feeding apparatus for feeding the stabilizer to said mud kneading apparatus, and a mud pneumatic transporting apparatus following said mud kneading apparatus,
said mud kneading apparatus including a vertical or horizontal double-shaft paddle mixer,
said stabilizer feeding apparatus including a stabilizer silo and a stabilizer feeder which follows said stabilizer silo and connects to said mud kneading apparatus, and
said mud pneumatic transporting apparatus including a pressure pump following said mud kneading apparatus and an ejector for injecting compressed air arranged on the way of said tube.

11. Solidification and pneumatic transportation equipment as claimed in claim 10, further comprising a check valve arranged between said pressure pump and said ejector.

12. Solidification and pneumatic transportation equipment as claimed in any one of claims 10 and 11, further comprising a flowmeter arranged between said flow control means of said mud storage tank and said mud kneading apparatus, and a control apparatus for controlling said stabilizer feeder to feed the stabilizer corresponding to the flow rate of the soft mud.

13. Solidification and pneumatic transportation equipment for uniformly mixing stabilizer into stored soft mud and pneumatically transporting the soft mud through a tube, comprising a mud storage tank for storing the soft mud having flow control means disposed at a discharge opening thereof, a mud pneumatic transporting apparatus following said flow control means for pneumatically transporting the soft mud, and a stabilizer feeding apparatus for adding the stabilizer to the soft mud during the transportation of the soft mud,
said mud pneumatic transporting apparatus including a pressure pump following said flow control means and an ejector for injecting compressed air arranged on the way of said tube, and
said stabilizer feeding apparatus including a stabilizer silo, a stabilizer feeder and vertical screw conveyor which follow said stabilizer silo and connect to the upstream side of said pressure pump.

14. Solidification and pneumatic transportation equipment as claimed in claim 13, further comprising a check valve arranged between said pressure pump and said ejector.

15. Solidification and pneumatic transportation equipment as claimed in any one of claims 13 and 14, further comprising a flowmeter arranged to the downstream side of said flow control means of said mud storage tank and a control apparatus for controlling said stabilizer feeder to feed the stabilizer corresponding to the flow rate of the soft mud.
